# EUROPÄISCHE PATENTANMELDUNG

(11) **EP 0 735 450 A2**
(43) Veröffentlichungstag der Anmeldung: **02.10.1996**
(21) Anmeldenummer: 96104386.6
(22) Anmeldetag: 20.03.1996
(51) Int. Cl.: G05D 23/02

(54) **Thermostatventil für eine Fussbodenheizung**

(30) Priorität: 27.03.1995 DE 19511190; 24.09.1995 DE 19535367
(71) Anmelder: OREG DRAYTON ENERGIETECHNIK GmbH, D-36088 Hünfeld (DE)
(72) Erfinder: Braun, Lothar, 36100 Petersberg (DE)
(74) Vertreter: Kammer, Arno, Dipl.-Ing.

(57) **Zusammenfassung**

Es wird ein Thermostatventil für Fußbodenheizung beschrieben. Dieses arbeitet normalerweise wie ein übliches Thermostatventil mit stetiger Regelung der Ventilöffnung entsprechend der Differenz zwischen Raum- und Solltemperatur.

Das Thermostatventil ist derart ausgelegt, daß ihm im Bereich kleiner Heizleistung ein Zweipunkt-Verhalten aufgezwungen wird.

## Beschreibung

Die Erfindung betrifft ein Thermostatventil für eine Fußbodenheizung mit den Merkmalen des Oberbegriffs des Anspruchs 1.

Bisher sind Thermostatventile relativ wenig verbreitet für den Einsatz in Fußbodenheizungen. Primär hängt dies damit zusammen, daß die sogenannte Drosselregelung in der Fußbodenheizung grundsätzlich nicht zu guten Regelergebnissen führen kann:

Zwar kann in der Aufheizphase bzw. bei niedrigen Außentemperaturen (großer Heizungsbedarf) das Thermostatventil durchaus seine Regelfunktionen ausführen und bei Übersteigen des an ihm eingestellten Soll-Werts der Raumtemperatur die Wärmezufuhr drosseln; aber bei der Drosselung der installierten Wärmeleistung unter etwa 50 % kommt es zu einer unzulässigen ungleichmäßigen Erwärmung der Fußbodenheizungsfläche.

Erwärmt sich beispielsweise ein Radiator bei starker thermostatischer Drosselung nur an seiner oberen Narbe, stört dies den Nutzer kaum, solange das Thermostatventil damit die Raumtemperatur auf dem eingestellten Niveau hält.

Anders dagegen bei der Fußbodenheizung: Hier würde nur ein bestimmter Bereich - einige m² im Vollauf - erwärmt und der übrige Fußbodenbereich würde kalt bleiben. Die Idee der Komfortheizung mit gleichmäßigen Fußbodentemperaturen oberhalb der eingestellten Raumtemperatur wäre nicht gewährleistet bzw. nicht vorhanden.

Eine denkbare Abhilfe, die Drosselregelung zu ermöglichen, könnte beispielsweise wie folgt realisiert werden: Die Hälfte der Heizkreise wird ohne Drosselung (Thermostatventil) betrieben und die andere Hälfte wird mit Thermostatventilen ausgerüstet. Dies ist in der Praxis nur dann möglich, wenn der Raum mit 2 Heizkreisen betrieben wird, was zu erhöhten, Materialaufwand führt. Zum anderen kann in der heizschwachen Zeit die Grundheizung mit etwa 50 % der Heizleistung erheblich zu hoch liegen und zu überhöhten Raumtemperaturen führen.

Eine andere Methode könnte darin bestehen, daß die Fußbodenheizung vor Einsatz der stetigen Regelung für einige Minuten voll durchströmt wird, damit zunächst eine gleichmäßige Durchwärmung der Fußbodenheizungsfläche erzielt wird. Wegen der relativ großen Zeitkonstante der Regelstrecke (Fußbodenheizung) müssen die Regelparameter sehr genau aufeinander abgestimmt sein, um zu verhindern, daß nur ein Zweipunkt-ähnliches Regelverhalten erreicht wird.

Die Erfindung hat zum Ziel, die Raumtemperaturregelung mit Hilfe von Thermostatventilen für die Fußbodenheizung so zu verbessern, daß eine quasi stetige Regelung mit Thermostatventilen verwirklicht werden kann. Diese Aufgabe wird durch die im Anspruch 1 angegebenen Merkmale gelöst.

Die Erfindung bewirkt, daß im unteren Leistungsbereich dem Thermostatventil eine Zweipunkt-Regler-Charakteristik aufgezwungen wird; im oberen Leistungsbereich arbeitet das Thermostatventil dagegen in bekannter stetiger Arbeitsweise. Unter Zweipunkt-Verhalten wird dabei ein Verhalten verstanden, bei dem das Thermostatventil bei kleiner Heizleistung voll geschlossen wird und danach wieder geöffnet wird.

Um dies zu erreichen, wird beispielsweise in einer Bauart an der Kraftverbindungsstelle zwischen Ventil und Thermostatkopf eine Memory-Tellerfeder so angeordnet, daß diese bei einer Heizwassertemperatur von beispielsweise bis unter 35°C das Ventil voll aufschaltet, dagegen bei höheren Temperaturen eine stetige Regelung zuläßt.

In einer anderen Version wird die Stellventilfeder so ausgebildet, daß bei einer Heizwassertemperatur von beispielsweise bis zu 35°C die Feder-Charakteristik erheblich flacher wird. Dadurch wird gemäß der Aufgabenlösung des Patentgedankens das Ventil im unteren Temperaturbereich ganz aufgedrückt, so daß eine volle Durchströmung und Durchwärmung der Fußbodenheizungsfläche erreicht wird.

Steigt die Wassertemperatur über die gewählte Temperatur (35°C), so kehrt die Feder-Charakteristik in die ursprüngliche zurück (Memory-Effekt) und das Thermostatventil arbeitet oberhalb von Heizwassertemperaturen von 35°C wie ein gewöhnliches Thermostatventil.

Bei abfallender Raumtemperatur drosselt das Thermostatventil in seinem Normalarbeitsbereich die Heizleistung so lange, bis die Heizwassertemperatur wiederum unter die gewählte Temperatur fällt. Die Memory-Feder erinnert sich an ihre flachere Charakteristik. Das Ventil wird wieder voll aufgedrückt, so daß eine volle Durchströmung mit warmem Heizwasser erfolgen kann.

Die Zeitkonstante des Zweipunkt-Regelverhaltens ist im wesentlichen über die gewählten Wärmeübergänge zur Memory-

Feder beeinflußbar. Praktischerweise kann sie zwischen 1 Minute und ca. 5 Minuten gewählt werden.

Das erfindungsgemäße Thermostatventil kann am Eingang und am Ausgang der Fußbodenheizung angeordnet sein. Entsprechend wird die Temperatur des Heizwassers, bei der die Änderung der Eigenschaft erfolgt, unterschiedlich zu wählen sein: bei Einschaltung in den Vorlauf z.B. 40°C, bei Einschaltung in den Rücklauf z.B. 20°C. Auch kann eine Beeinflussung durch Vor- und Rücklauf erfolgen.

Die Temperaturübertragung vom Heizwasser auf das Federelement erfolgt jeweils durch die gut wärmeleitenden, metallischen Übertragungselemente zwischen dem Ausdehnungselement und dem Ventilkörper.

Es kann zwischen dem Thermostatkopf und der Ventileinheit auch ein Adapter eingeschaltet werden, in dem die Mittel zur Erzeugung des Zweipunkt-Verhaltens und zur Umschaltung zwischen Normalbetrieb und Zweipunkt-Verhalten und umgekehrt untergebracht sind.

Solche Mittel können temperaturabhängige Federanordnungen aber auch Kombinationen von solchen Federanordnungen und Magnetanordnungen sein.

Anhand der Zeichnung werden Ausführungsbeispiele der Erfindung erläutert. Es zeigen:
- Fig. 1: ein erfindungsgemäßes Thermostatventil
- Fig. 2: ein Diagramm
- Fig. 3: ein Ausführungsbeispiel, bei dem die Ventilfeder einer Mischtemperatur aus Vor- und Rücklauftemperatur ausgesetzt ist.
- Fig. 4 und 5: die Verwendung eines Adapters zwischen dem eigentlichen Ventil und dem Thermostatkopf zur Realisierung des Erfindungsgedankens.
- Fig. 6 und 7: Realisierungen der Erfindung mittels einer Magnetanordnung und eines temperaturabhängigen Federelements.

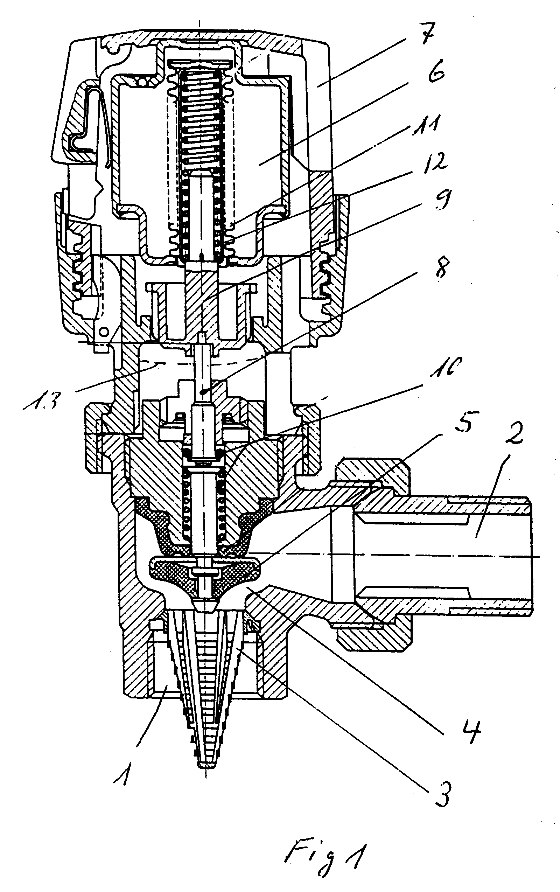

In Fig. 1 sind mit 1 und 2 die Anschlüsse des Thermostatventils bezeichnet. Im Anschluß 1 ist ein Schmutzsieb angeordnet. Ein Ventilsitz ist mit 4, der zugehörige Ventilkörper mit 5 bezeichnet. Betätigt wird der bewegliche Ventilkörper 5 von einem Flüssigkeitsausdehnungselement 6 bzw. einem Temperaturwähler 7 und zwar über eine Thermostat-Kopfstange 8 und eine Ventilstange 9. Der temperaturabhängigen Bewegung in Richtung Ventilschließen wirkt eine Ventilfeder 10 (Rückstellfeder) entgegen.

Bis jetzt wurde ein übliches Thermostatventil beschrieben, bei dem die Differenz der durch den Temperaturwähler 7 vorgewählten Temperatur und der Raumtemperatur eine Änderung der Länge des Flüssigkeitsausdehnungselements 6 bewirkt, die in eine Bewegung des Ventilkörpers zum Sitz hin oder von ihm weg umgesetzt wird.

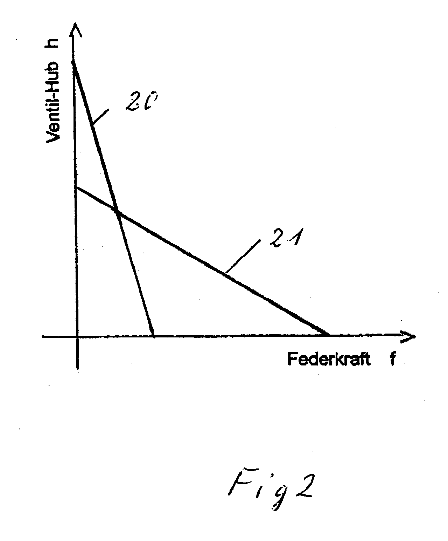

Erfindungsgemäß ist die Ventilfeder 10 aus Memory-Metall gefertigt. Diese Ventilfeder hat die Eigenschaft, daß sie bei Erreichen einer vorgewählten Temperatur ihre Federeigenschaft ändert: Während sie z.B. bis 35°C eine hohe Steifigkeit aufweist, die sich einem Schließungsversuch des Flüssigkeitsausdehnungselements und seiner Überdrucksicherungsfeder 12 widersetzt und das Ventil offen hält, erhält die Feder ab 35°C eine Federcharakteristik die zusammen mit dem Flüssigkeitsausdehnungselement und seiner Überdrucksicherungsfeder 12 eine stetige Regelung der Ventilöffnung entsprechend der Temperaturdifferenz zwischen Solltemperatur und Raumtemperatur bewirkt. Die unterschiedliche Eigenschaft der Feder ist aus Fig. 2, wo der Ventilhub über der Federkraft aufgetragen ist, erkennbar. Hier ist Federcharakteristik 20 gezeigt, die im Bereich oberhalb der Änderungstemperatur wirksam ist. Hier bewirkt eine geringe Änderung der auf die Ventilfeder 10 einwirkenden Kraft eine relativ große Änderung des Hubs durch Zusammenpressen der Überdrucksicherungsfeder 12. Bei Unterschreiten der Änderungstemperatur (z.B. 35°C) wird die Federcharakteristik 21 wirksam, die viel härter ist. Diese erhöhte Kraft wird von der Überdrucksicherungsfeder 12 nicht aufgebracht, d.h., das Ventil bleibt offen.

Das Teil 11 (Wellrohr) hat mit der Erfindung nichts zu tun und wird deshalb hier nicht näher beschrieben.

Die Überdrucksicherungsfeder 12 behält ihre übliche Funktion, wird aber in ihrer Federcharakteristik passend zur Memory-Feder ausgelegt.

Alternativ könnte etwa am Berührungspunkt der Ventilstange 9 und der Thermostatkopfstange 8 eine Tellerfeder 13 angeordnet sein, die aus Memory-Metall gefertigt ist. Diese würde z.B. unter 35°C mit hoher Federwirkung die Ventilstange 9 und damit den Ventilkörper 5 nach oben ziehen und damit eine Regelung unterbinden, nach Überschreiten der 35°C unwirksam werden oder zusammen mit der Ventilfeder 10 einerseits und dem Ausdehnungselement die Regelung der Ventilöffnung bewirken.

Die Temperatur des Heizwassers wird in beiden geschilderten Fällen durch die metallischen Teile der Konstruktion und besonders durch Teile 8 und 10 übertragen.

Anstelle einer Feder mit Memory-Charakter und Federeigenschaftsänderung kann die Erfindung auch durch ein Element mit Schnappeigenschaft realisiert werden, wobei dieses Element z.B. im unteren Temperaturbereich auf den Ventilkörper einwirkt und ihn vom Sitz abhebt und bei Erreichen der vorgegebenen Temperatur umschnappt und nun nicht mehr auf den Ventilkörper einwirkt, sondern ihn der Regelung durch das Ausdehnungselement und die Ventilfeder überläßt.

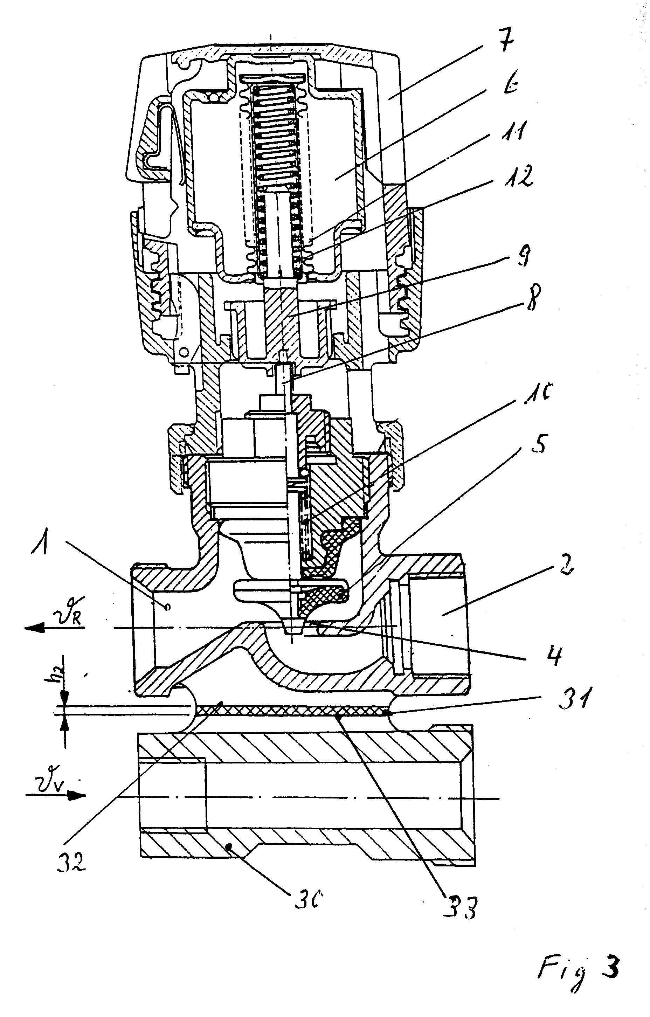

Beim Ausführungsbeispiel der Fig. 3 ist wieder ein Thermostatventil gezeigt, das weitgehend dem der Fig. 1 entspricht. Deshalb tragen die einzelnen Teile die gleichen Bezugsziffern wie in Fig. 1. Lediglich die Anschlüsse 1 und 2 sind etwas anders angeordnet. Mit dem Thermostatventil ist hier ein Metallkörper 30 verbunden. Dieser Metallkörper wird ebenfalls von der Heizflüssigkeit durchflossen. Es ist hier unterstellt, daß er in den Vorlauf eingeschaltet ist, während das Thermostatventil mit seinen Anschlüssen im Rücklauf liegt. Somit wird die Ventilfeder 10 hier nicht nur von der Temperatur der Heizflüssigkeit des Rücklaufs beeinflußt, sondern sie ist einer Mischtemperatur der beiden Temperaturen ausgesetzt. Die Abhängigkeit von der Temperatur des Vorlaufs ist durch eine Isolierschicht 31 an der Verbindungsstelle des Körpers 30 mit dem Ventilkörper beeinflußbar und zwar durch deren Dicke h und/oder deren Wärmeleitfähigkeit. Sowohl an dem Ventil als auch an dem Metallkörper 30 sind Flächen 32 bzw. 33 ausgebildet, die sich entweder direkt berühren oder durch die Isolierschicht 31 getrennt sind. Diese Flächen 32 und 33, gegebenenfalls mit der Isolierschicht 31, bewirken den Wärmeübergang zwischen den Körpern. Der Körper 30 kann an den Ventilkörper z.B. angeschraubt sein.

Der beschriebene Thermoblock liefert also eine Mischtemperatur an die Ventilrückholfeder. Mit der Einrichtung ist es möglich, die Zeitkonstante und das Temperatur-Niveau des Auf-/Zu-Mechanismus zu beeinflussen bzw. zu bestimmen. Wird der Durchströmungskörper des Vorlaufes stark vom Ventilkörper isoliert, ist die Auf-/Zu-Schaltung weitgehend von der Rücklauftemperatur abhängig; ist der Durchströmungskörper ohne Zwischenisolierung metallisch auf den Ventilkörper montiert, entsteht im Thermoblock ein Temperatur-Mittelwert aus der Vor- und Rücklauftemperatur. Isolierende Zwischenschichten von z.B. 0 bis 5 mm zwischen Metall (-Vorlauf-) -Körper und Ventilkörper erreichen wählbare bzw. einstellbare geeignete tiefere Thermoblock-Temperaturen (= Memory-Temperaturen).

Selbstverständlich kann es in bestimmten Anwendungsfällen sinnvoll sein, den Rücklauf und den Vorlauf zu vertauschen.

Die Auslegung der Memory-Metall-Ventilrückholfeder wird so gewählt, daß bei einer bestimmten niedrigen Mischtemperatur das Ventil ganz öffnet (harte Feder) und bei einer etwas höheren Temperatur wieder schließt (weiche = normale Feder) bzw. in seine normale Regelposition gebracht wird. Die wählbaren Temperaturen für Öffnen und Schließen der Memory-Charakteristik liegen im Bereich von 5°C bis 100°C.

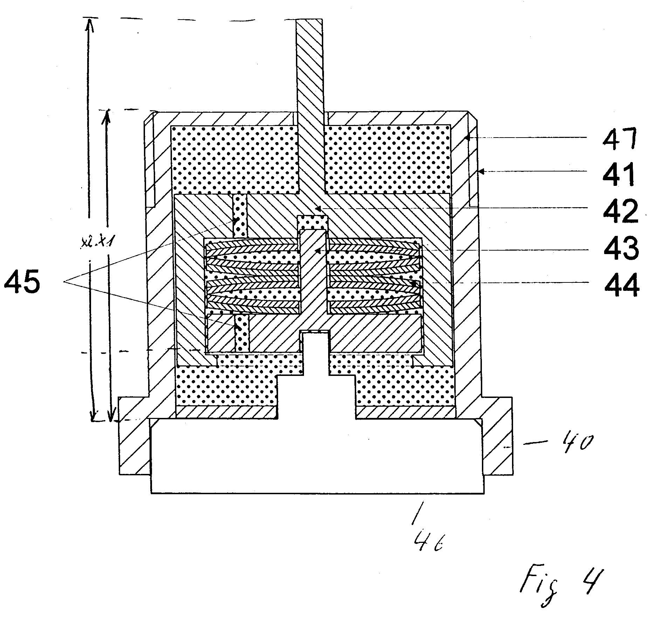

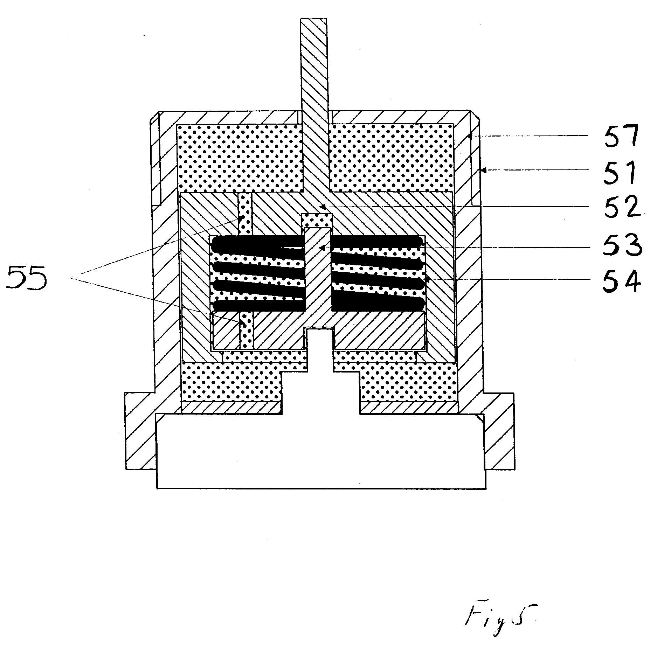

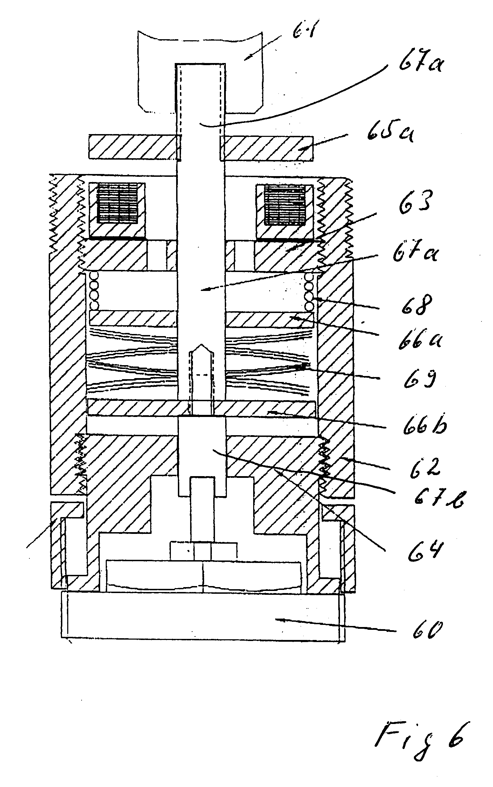

Anhand der Fig. 4 und 5 werden Alternativen zur Fig. 1 aufgezeigt. Hier sind alternative Adapter dargestellt, die zwischen das normale Thermostatventil (Fig. 1, Teile 1 bis 5, 8 und 10) und den Thermostatkopf (in Fig. 1, Teile 6, 7 und 9 und 11) geschraubt werden.

Der Adapter 47 der Fig. 4 wird bei 40 auf das Thermostatventil 46 aufgeschraubt und bei 41 wird mit einer Überwurfmutter der Thermostatkopf angeschraubt. Damit sind das Thermostatventil und der Thermostatkopf kraftschlüssig miteinander verbunden. Der Kraftschluß wird durch die Teile 42, 43 und die Bimetall-Tellerfeder 44 bewirkt.

Die Teile 42, 43 und 44 besitzen oberhalb der Grenztemperatur von 25°C eine bestimmte Länge X₂, die dem Gehäusemaß X₁ entspricht. In dem Temperaturbereich oberhalb 25°C arbeiten Ventil und Thermostatkopf über die Verbindung des Zweipunkt-Adapters als ganz normale Standard-Einheit mit allen Eigenschaften eines guten Thermostatventils. Oberhalb von 25°C sollen die Bimetall-Tellerfedern ihre größte Ausdehnung besitzen.

Unterhalb einer Temperatur von etwa 22°C soll die Federkraft der Tellerfeder 44 so weit abgesunken sein, daß die Ventilfeder das Ventil aufdrücken kann. In diesem Fall ist das Maß X₂ um das Maß S (ca. 0,4 mm) zurückgegangen. Die Hubbegrenzung des Teils 43 durch Teil 42 ist erforderlich, um bei höheren Durchflußtemperaturen die normale Funktion des Thermostatventils zu gewährleisten.

Zwecks Temperaturübertragung der Temperatur des Ventilkörpers (Durchflußtemperatur) kann der Zweipunkt-Regel-Adapter mit Silikonöl gefüllt werden. Mit den Bohrungen 45 kann auf das Zeitverhalten der Umschaltung dvon Zweipunkt-Betrieb auf Normalfunktion des Thermostatventils Einfluß genommen werden. Auch die Verwendung von Magnetflüssigkeit und geeigneter Werkstoffwahl der Teile 42, 43 und 44 kann die Wärmeübertragung alternativ gewährleisten.

Bei Nenndurchfluß liegen die Temperaturen des Ventils erheblich über der Raumtemperatur beispielsweise bei 25°C und die Bimetall-Tellerfeder 44 hat ihre stärkste Wölbung. Durch Drosselung des Durchflusses auf sehr kleine Werte, nähert sich die Rücklauftemperatur der Raumtemperatur. Ist beispielsweise die Bimetall-Reaktionstemperatur auf 23°C eingestellt, dann wird die Tellerfeder ab dieser Temperatur flacher. Hatte der Thermostatkopf zuvor das Ventil geschlossen, uni die Raumtemperatur nicht ansteigen zu lassen, so wird nun bei Erkalten des Rücklaufs die Tellerfeder 44 das Ventil öffnen, weil der Weg für den Kraftschluß kürzer geworden ist und die Ventilfeder das Ventil öffnen kann. Die Temperatur der Bimetall-Tellerfeder 44 steigt wieder an, sobald durch das Ventil Heizmedium fließt und nimmt ihre ursprüngliche Wölbung wieder ein, so daß das Thermostatventil sein übliches Regelverhalten wiedererhält: Ist die Raumtemperatur abgesunken, wird das Ventil weiter geöffnet, es fließt ein größerer Durchfluß und die Tellerfeder behält ihre max. Ausdehnung. Wird die Raumtemperatur erreicht, beginnt das Zweipunkt-Regelspiel von neuem. Die Bimetall-Tellerfeder wirkt als eine Art Rückführung im Regelkreis: Nach Öffnung für einen zunächst größeren Durchfluß wirkt sie mit steigender Ventiltemperatur einer zu großen Öffnung entgegen. So wird ein zu großer Raumtemperaturanstieg verhindert.

In Fig. 5, die sonst mit Fig. 4 identisch ist, ist lediglich die Tellerfeder 44 durch eine Memory-Spiralfeder 54 ersetzt. Für Memory-Metallfedern ist es typisch, daß sie bei niedrigen Temperaturen hohe Kräfte liefern und bei hohen Temperaturen nur kleine Kräfte entwickeln. Dies ermöglicht alternativ die Verwendung von Memory-Federn, wie sie beispielsweise von der Fa. G. Rau, Pforzheim hergestellt werden. Die Druckfeder hat im Temperaturbereich oberhalb 30°C eine kleinere Federkonstante als die jeweils verwendete Überdrucksicherungsfeder, siehe Fig. 1. Unterhalb von beispielsweise 22°C liegt die Kraft der Memory-Effekt erheblich unter der der Überdrucksicherungsfeder.

Die Ausführungen gemäß Figuren 4 und 5 sind dadurch gekennzeichnet, daß die Federkonstanten der temperaturabhängigen Federelemente und der Überdrucksicherungsfeder größer sind als die der Ventilfeder.

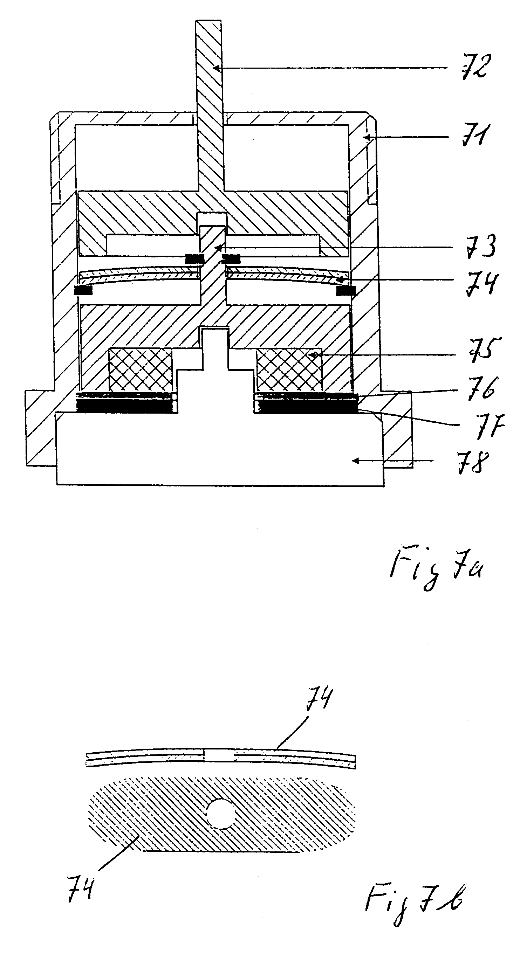

In Fig. 6 ist ein weiterer zwischen Thermostatventil 60 und Thermostatkopf 61 einsetzbarer Adapter dargestellt. Er weist ein Gehäuse 62 und in diesem feststehende Teile 63 und 64 auf. Teil 64 trägt einen Magneten 65, der mit einem Ring 65 a zusammenarbeitet, der an der Verbindungsstange 67 a und 67 b zwischen dem Ventil 60 und dem Kopf 61 angeordnet ist. An dieser Stange 67 a/67 b sind auch Platten 66 a und 66 b befestigt. Zwischen den Teilen 63 und 66 a ist eine Spiralfeder 68 und zwischen den Platten 66 a und 66 b sind Bimetalltellerfedern 69 angeordnet.

Haben die Bimetalltellerfedern eine Temperatur, die über einer vorgegebenen Temperatur von z.B. 25°C liegt, so sind sie steif und der Abstand zwischen den Platten 66 a und 66 b ist groß: Die Regelkraft des Thermostatkopfes (80 N) regelt den Durchfluß durch das Ventil 60, da diese Regelkraft die Ventilfederkraft (30 N) übersteigt. Die Zugkraft des Magneten 65 bei relativ großen Luftspalt (ca. 10 N), plus die Kraft der Feder 68 im eingedrückten Zustand (6 N), plus die Federkraft des Bimetalls bei maximaler Ausdehnung (10 N) reichen hier nicht, um das Ventil gegen die Ventilfeder zu schließen. Bei Raumerwärmung verkleinert der Thermostatkopf den Öffnungsweg des Ventils 60, gleichzeitig aber auch den Luftspalt des Magneten 65. Entwickelt dieser eine Zugkraft von 20 N, so ergibt die Addition dieser Zugkraft plus die Kraft der Bimetallfeder (10 N) plus die verbleibende Kraft der nun entspannten Spiralfeder (1 N) eine resultierende Kraft (31 N), die die Kraft der Ventilfeder übersteigt: Das Ventil wird somit bei Erreichen einer bestimmten kleinen Durchflußöffnung geschlossen. Diese Schließbewegung wird durch den sich weiter verkleinernden Luftspalt des Magneten 65 unterstützt.

Damit sinkt die Temperatur des Adaptersystems, und die Ausdehnung des Bimetalls verringert sich und damit auch die von ihm aufgebrachte Kraft. Wird der Kraftüberschuß der Ventilfeder wieder erreicht, so wird die Verbindungsstange 67 a/67 b von der Ventilfeder gegen den Thermostatkopf 61 gedrückt, der Luftspalt des Magneten 65 und die Öffnungskraft wird vergrößert. Die Öffnung wird nur durch die Stellung des Thermostatkopfes begrenzt.

Das Ventil hat einen Gesamtöffnungsweg von z.B. 2,3 mm. die maximale Ausdehnungsdifferenz des Bimetalls 69 ist z.B. 0,4 mm. Es kommt hier zu einem Zweipunkt-Verhalten des Ventil 68 zwischen Ventil geschlossen und Ventil zumindest mit 0,4 mm Öffnungsweg geöffnet.

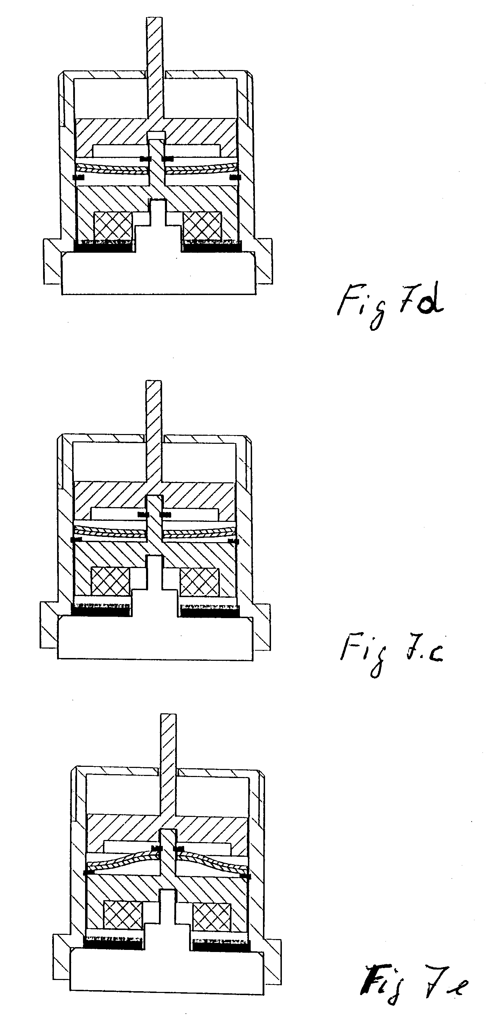

Fig. 7 a zeigt ein weiteren zwischen Thermostatventil 78 und Thermostatkopf einsetzbaren Adapter. Ein Metalldrehteil 71 dient der Befestigung des Adapters zwischen Ventil 78 und Thermostatkopf. Verschiebbare Teile 72 und 73 dienen dem Kraftschluß zwischen Kopf und Ventil. Der Totgang zwischen den Teilen 72 und 73 dient der Unterbrechung eines sogenannten schleichenden Betriebs mit Hilfe eines Permanentmagneten 75. Ein Bimetall 74 liefert die Öffnungskraft (Abzugskraft des Magneten), wenn für eine Zeitlang die Temperatur des Heizmediums (Wasser) abgesunken ist, z.B. unter 28°C . Mit 77 ist ein Ring aus magnetischen Material und mit 76 ein Kunststoff Distanzring bezeichnet. Bei einer Temperatur des Heizmediums von z.B. 26 bis 28°C und geöffnetem Ventil ist der Bimetallstreifen 74 (Fig. 7 b) ohne Wirkung: Die Ventilfeder drückt die Teile 73 und 72 gegen den Ventilkopf: Es erfolgt eine Raumtemperaturregelung durch das wie üblich arbeitende Thermostatventil. Diese Situation zeigt Fig. 7 c.

Verschiebt im Verlauf einer solchen Regelung der Thermostatkopf die Teile 72 und 73 so weit nach unten (Ventilöffnung wird kleiner), daß die Magnetkraft zwischen dem Magneten 75 und der Scheibe 77 größer als die Ventilfederkraft wird, so wird das Ventil schlagartig geschlossen (Fig. 7 d).

Nun kühlt das Ventil 78 und mit ihm der Adapter und sein Bimetall 74 ab. Wird eine Temperatur von z.B. 25 bis 26°C erreicht, so wölbt sich der Bimetallstreifen 74 auf und erzeugt zusammen mit der Kraft der Ventilfeder eine die Haftkraft des Magneten 75 übersteigende Kraft. Dieser wird von seinem Sitz abgehoben und das Teil 73 wird gegen das Teil 72 und dieses gegen den Anschlag des Thermostatkopfes geschoben (Fig. 7 e). Das Ventil wird geöffnet. Hat durch die Wirkung des Bimetallstreifens 74 und der Ventilfeder eine Öffnung des Ventils stattfinden können, so fließt heißes Medium, das den Adapter und das Bimetall 74 erwärmt.

Damit entfällt die zusätzliche Kraft des Bimetalls. Ist die durch die Stellung des Thermostatventilkopfes bedingte Öffnung des Ventils 78 nur so groß, daß nach Wegfall der zusätzlichen Kraft des Bimetallstreifens die Magnetkraft die Federkraft der Ventilfeder wieder übersteigt, so wird das Ventil wieder geschlossen. Dieser Stoßbetrieb wiederholt sich, bis das Ventil wegen der Stellung des Thermostatventilkopfes (läßt größere Öffnung wegen Wärmebedarf zu) so weit geöffnet werden kann, daß nach Wegfall der Bimetallkraft die Magnetkraft nicht mehr ausreicht, um das Ventil zu schließen. Nun herrscht wieder üblicher Regelbetrieb.

Der Thermostatkopf behält demnach seine Regelfunktion im Hauptlastbereich uneingeschränkt bei. Im unteren Lastbereich erzeugt der Magnet zusammen mit dem Bimetall ein Sprungverhalten, was dazu führt, daß Heizungswasser stoßweise zugeführt wird. Ein schleichender Betrieb wird dadurch im unteren Lastbereich mit Sicherheit verhindert.

## Patentansprüche

1. Thermostatventil für eine Fußbodenheizung enthaltend das eigentliche Ventil und den Thermostatkopf, bei dem der Ventildurchfluß normalerweise über ein Ausdehnungselement im Thermostatkopf in Abhängigkeit von der Differenz der Solltemperatur zur tatsächlichen Raumtemperatur geregelt wird (Normalregelung), dadurch gekennzeichnet, daß im Bereich kleiner Heizleistung dem Thermostatventil ein Zweipunkt-Verhalten aufgezwungen wird.

2. Thermostatventil Nach Anspruch 1, dadurch gekennzeichnet, daß das Thermostatventil ein der Temperatur der Heizflüssigkeit ausgesetztes Element (10, 13) aufweist, das bei Erreichen einer vorgegebenen Temperatur der Heizflüssigkeit eine seiner Eigenschaften ändert, und daß dieses Element derart wirksam ist, daß es bis zum Erreichen der vorgegebenen Temperatur den Ventilkörper (5) von seinem Sitz (4) abhebt und ab Erreichen der vorgegebenen Temperatur die Normalregelung zuläßt.

3. Thermostatventil nach Anspruch 2, dadurch gekennzeichnet, daß das Element die Ventilfeder (10) selbst ist, die bis zum Erreichen der vorgegebenen Temperatur eine hohe Steifigkeit aufweist und nach Überschreiten der vorgegebenen Temperatur die zur Regelung notwendige Federcharakteristik aufweist.

4. Thermostatventil nach Anspruch 2, dadurch gekennzeichnet, daß neben der Ventilfeder ein zusätzliches Federelement (13) vorgesehen ist, das die von der Temperatur der Heizflüssigkeit abhängige Eigenschaften aufweist.

5. Thermostatventil nach Anspruch 4, dadurch gekennzeichnet, daß das zusätzliche Federelement eine Tellerfeder (13) ist, die auf die Verstellmechanik (8, 9) für den Ventilkörper (5) einwirkt.

6. Thermostatventil nach einem der Ansprüche 3 bis 5, dadurch gekennzeichnet, daß das Federelement aus Memory-Metall besteht.

7. Thermostatventil nach Anspruch 1 oder 2, dadurch gekennzeichnet, daß das Element eine Schnappeigenschaft aufweist, wobei bei Erreichen der vorgegebenen Temperatur das Umschnappen vorsichgeht, wonach jeweils die andere Eigenschaft wirksam wird.

8. Thermostatventil nach einem der Ansprüche 2 bis 7, dadurch gekennzeichnet, daß die Temperatur, der das Element (10, 13) ausgesetzt ist, durch die Temperatur des Vorlaufs und des Rücklaufs beeinflußt ist.

9. Thermostatventil nach Anspruch 8, dadurch gekennzeichnet, daß das Ventil selbst in den Vorlauf eingeschaltet ist, daß mit dem Ventil ein gut wärmeleitender Körper (30), insbesondere aus Metall, wärmeleitend verbunden ist und daß der Körper (30) von der Heizflüssigkeit des Rücklaufs durchflossen ist.

10. Thermostatventil nach Anspruch 8, dadurch gekennzeichnet, daß das Ventil selbst in den Rücklauf eingeschaltet ist, daß mit dem Ventil ein gut wärmeleitender Körper (30) insbesondere aus Metall wärmeleitend verbunden ist und daß der Körper (30) von der Heizflüssigkeit des Vorlaufs durchflossen ist.

11. Thermostatventil nach Anspruch 9 oder 10, dadurch gekennzeichnet, daß der Grad des Wärmeübergang von dem Körper (30) zum Ventil durch die Ausgestaltung ihrer Verbindung wählbar ist.

12. Thermostatventil nach Anspruch 11, dadurch gekennzeichnet, daß die Verbindung zumindest teilweise über eine Isolierschicht (31) erfolgt, deren Dicke (h) und/oder Wärmeleitfähigkeit wählbar ist.

13. Thermostatventil nach einem der Ansprüche 1 bis 12, dadurch gekennzeichnet, daß zwischen das Thermostatventil und den Thermostatkopf ein Adapter eingeschaltet ist, der die Mittel zur Erzeugung des Zweipunkt-Verhaltens und zur Umschaltung zwischen Normalregelung und Zweipunkt-Verhalten enthält.

14. Thermostatventil nach Anspruch 1 oder 13, dadurch gekennzeichnet, daß es oder der Adapter zwei um eine vorgegebene Wegstrecke gegeneinander verschiebbare, zwischen dem eigentlichen Ventil und dem Thermostatkopf wirksame Teile (42, 43) aufweist, daß zwischen den beiden Teilen (42, 43) ein Federelement (44, 54) wirksam ist, das bei einer hohen Temperatur steif ist und das Ventil und den Thermostatkopf über die beiden Teile (42, 43) kraftschlüssig miteinander verbindet und bei einer niedrigeren Temperatur eine Relativbewegung der beiden Teile zueinander und damit eine Öffnung des Ventils zuläßt und daß das Federelement (44, 54) der Temperatur des Heizmediums (Vorlauf und/oder Rücklauf) zumindest indirekt ausgesetzt ist.

15. Thermostatventil nach Anspruch 1 oder 13, dadurch gekennzeichnet, daß zur Erzeugung des Zweipunkt-Verhaltens eine Magnetanordnung (65, 65 a und 74) vorgesehen ist, die bei einer bestimmter Annäherung des Ventils (60; 78) an seine Schließstellung das Ventil schließt und daß ein von der Temperatur der Heizflüssigkeit abhängiges Federelement (69; 74) vorgesehen ist, das bei Absinken der Temperatur der Heizflüssigkeit das Öffnen des Ventils (60; 78) zuläßt oder bewirkt.

16. Thermostatventil nach Anspruch 15, dadurch gekennzeichnet, daß ein den Thermostatkopf und das Ventil verbindende Einheit (67 a, 67 b) vorgesehen ist, daß die Kraft der Magnetanordnung auf diese Stange in Richtung zum Ventil einwirkt, und daß ein bei hoher Temperatur die Einheit in Richtung zum Ventil treibende Kraft eines Federelements (69) wirksam ist, die bei Abkühlung entfällt und damit das Öffnen des Ventils zuläßt.

17. Thermostatventil nach Anspruch 15, dadurch gekennzeichnet, daß zwischen Ventil (78) und Thermostatventilkopf zwei um eine vorgegebene Weglänge gegeneinander verschiebbare Teile (72, 73) wirksam sind, die eine direkte Beeinflussung des Ventils (78) durch den Thermostatkopf zulassen, daß die Magnetanordnung (75-77) auf das dem Ventil (78) nähere Teil (73) einwirkt und über dieses bei der vorgegebene Annäherung an die Schließstellung das Ventil (78) schließt, und daß auf das dem Ventil (78) nähere Teil bei niedrigen Temperaturen eine Federkraft (74) einwirkt, die ein Öffnen des Ventils (78) entgegen der Haftkraft der Magnetanordnung bewirkt, und daß die Federkraft (74) bei höherer Temperatur ihre Wirkung verliert.

18. Thermostatventil nach Anspruch 15 bis 17, dadurch gekennzeichnet, daß die Federelemente Bimetallfedern (69, 74) sind.
